# EUROPEAN PATENT APPLICATION

(11) **EP 1 990 320 A2**
(43) Date of publication of application: **12.11.2008**
(21) Application number: 08103930.7
(22) Date of filing: 12.05.2008
(51) Int. Cl.: C02F 9/00, C02F 1/44, C02F 1/461, C02F 1/467

(54) **Wastewater ammonium extraction and electrolytic conversion to nitrogen gas**

(30) Priority: 11.05.2007 GB 0709109
(71) Applicant: Enpar Technologies Inc., Guelph, Ontario N1G 4W1 (CA)
(72) Inventor: Seed, Leonard Paul, Guelph Ontario N1G 4Y8 (CA); Shelp, Gene Sidney, Guelph Ontario N1G 4A9 (CA)
(74) Representative: Asquith, Anthony

(57) **Abstract**

A new system is disclosed for extracting ammonia from a wastewater stream, and for transferring the ammonia into the secondary water circuit, where the dissolved ammonium is electrolysed and transformed into gaseous nitrogen. The new system makes use of a membrane of gas-permeable hydrophobic material. The wastewater is raised to pH of 11, and 50ºC, to make the transfer of ammonia through the membrane more efficient.

Also disclosed is a process-control system for the ammonium disposal system, in which pH sensors are used to control operation. Instruments for measuring ammonia-concentration directly are expensive, whereas pH-sensors are simple, reliable, and responsive. Disclosed are procedures for establishing the relationships between pH and the progress of the ammonium disposal treatment.

## Description

This invention relates to developments to the technology disclosed in patent publication US-7,160,430 (Shelp+Seed, 15 July 2004).

In that publication, ammonia is extracted from wastewater at an ammonia-extraction station. The ammonia extracted from the wastewater is transferred into a body of secondary-water. The secondary-water is then subjected to electrolysis, done in such manner as to transform the dissolved ammonium directly to nitrogen gas.

Two types of ammonia-extraction station are disclosed in '430, therein termed respectively the alkali-acid system and the ion-exchange system. The manner in which both those kinds of ammonia-extraction station are interfaced with the electrolysis technology is disclosed in '430.

It is now recognised that also another type of ammonia-extraction station can be made to operate cost-effectively with the said electrolysis technology. This will now be described.

As disclosed herein, the new ammonia-extraction station makes use of a hydrophobic gas-permeable membrane. Such membrane allows (gaseous) ammonia, NH3, to pass through the membrane, but is impermeable to water. (In this specification, the term -ammonia- should be understood generically as including ammonia, NH3, in both gaseous and dissolved form, and also as including the ionised form, ammonium, NH4+.)

The new ammonia-extraction station makes use of the following properties of ammonia in water. At high pH (e.g pH of ten to twelve) and high temperature (e.g thirty to sixty degC) ammonia in water takes the form predominantly of ammonia itself, NH3. At a more neutral pH and in an unheated state, ammonia in water typically is in the form of a mixture of dissolved ammonia gas and dissolved (ionised) ammonium, NH4+.

If neutral water containing ammonia is heated, and its pH raised, much of the dissolved ammonia and ammonium will then transform to ammonia gas -- which, being of low solubility in high-pH water, is readily extracted from the water. By contrast, when the water is at low pH (e.g a pH of two), nearly all the ammonia is in the form of ionised ammonium.

In the water-treatment system disclosed in the said US-7,160,430, first the ammonia was extracted from the wastewater. The wastewater, now with its ammonia content much reduced, was then discharged from the treatment system. Then, in '430, the extracted ammonia was transferred into a body of secondary-water, and the secondary-water was circulated through an electrolysis station, where the ammonia was oxidised to nitrogen gas.

In the present technology, similarly, the designers' intent is to extract the ammonia from the wastewater, and transfer it into the secondary-water. The temperature and pH of the wastewater are raised, whereby ammonia NH3 is the predominant form. The high-pH / high-temperature wastewater then passes into a membrane chamber. The ammonia NH3 passes through the membrane, but the liquid water does not.

On the other side of the membrane is the body of secondary-water. The secondary-water is of a low pH. Therefore, as the ammonia, NH3, having passed through the membrane, and upon entering the low-pH secondary-water, goes into solution as ionised ammonium, NH4+.

The secondary-water circulates through the electrolysis station, where the ammonium is oxidised to nitrogen gas.

As will be explained, one of the benefits of using the membrane system for transferring ammonia from the wastewater to the secondary-water, as compared with the acid-alkali system or the ion-exchange system, is in a now-enabled simplification of the electrochemical reactor and the secondary circuit.

In another aspect of the invention, described further below, measurements are taken of the pH of the secondary-water, to aid in the process-control of the secondary-water as it passes through the electrochemical-reactor.

The technology will now be further described with reference to the accompanying drawings, in which:
Fig.1 is a diagram of an apparatus that is used to extract ammonia from a wastewater stream, and to dispose of the ammonia as nitrogen gas.
Fig.2 is a diagram showing a modification to a part of the apparatus of Fig.1
Fig.3 is a diagram similar to Fig.1, showing additional features of the apparatus, as used for process-control.
Fig.3a is a graph showing concentration of ammonia, and accompanying changes in pH, reflective of the apparatus of Fig.3.
Fig.3b is a diagram of an apparatus used to obtain the graph of Fig.3a.
Fig.4 is a diagram of an apparatus that uses a similar system of process control to that described with reference to Fig.3.
Fig.4a is a graph like Fig.3a, but now reflective of the Fig.4 system.

The scope of the patent protection sought herein is defined by the accompanying claims. The apparatuses and procedures shown in the accompanying drawings and described herein are examples.

The features of structure or procedure, as described herein, although shown in or described in respect of just one embodiment, should be understood as being includable also to other embodiments, or as being interchangeable with corresponding features of other embodiments, unless otherwise stated, or unless such would be understood to be inappropriate or impossible.

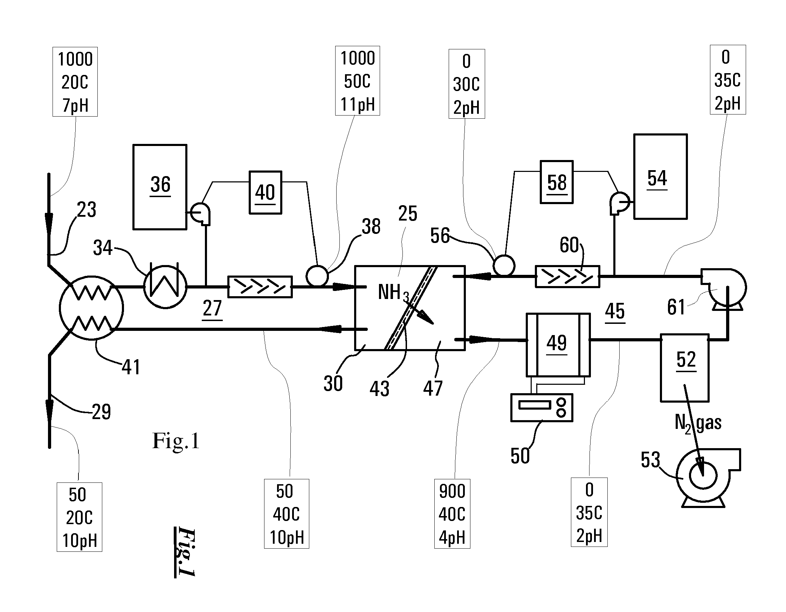

In Fig.1, wastewater enters the apparatus at inlet port 23 at a temperature of twenty degC and a pH of seven. The wastewater is contaminated with ammonium at a concentration of 1000 ppm. The wastewater travels through the membrane-chamber 25, and around the wastewater circuit 27, and is discharged through the outlet port 29.

(In Fig.1, several boxes are shown, each with three numbers. The numbers are examples of: (i) the ammonia concentration, in milligrams of ammonia-nitrogen per litre of water (the same number also represents parts-per-million); (ii) the temperature of the water; and (iii) the pH of the water.)

The wastewater enters the wastewater-subchamber 30 of a membrane-chamber 25. Prior to entering the membrane-chamber 25, the wastewater is heated to a temperature of about fifty degC by heater 34. The wastewater circulates around the wastewater-subchamber, and then exits from the wastewater outlet port.

The pH of the wastewater is also raised, prior to the wastewater entering the membrane-chamber 25. Sodium hydroxide (or other suitable base material) is stored in alkali-reservoir 36. The NaOH is dosed into the wastewater, under the control of pH-sensor 38 and controller 40. The wastewater is raised to a pH of about eleven, prior to entering the membrane-chamber.

Having passed through the wastewater-subchamber 30 of the membrane-chamber 25, the excess heat remaining in the water is given up to the cold incoming wastewater at the heat-exchanger 41. The treated wastewater emerges from the wastewater-circuit 27, at outlet 29, with an ammonia-N concentration, now, of e.g fifty ppm.

The apparatus as described in Fig.1 would be used on streams that are heavily contaminated (e.g between 500 and 3000 ppm). The discharged wastewater is still contaminated, containing e.g fifty or a hundred ppm of ammonia-N, but probably other systems would be more economical at driving that rather low ammonia concentration down to zero. (In this context, it will be understood that -zero- includes: too small to be measured, and too small to matter.) The apparatus of Fig.1 treats the wastewater, and the secondary-water, on a continuous basis; a batch-treatment system is usually preferred for driving low concentrations to zero.

The membrane 43 in the membrane-chamber 25 is hydrophobic and gas-permeable. That is to say: a gas such as ammonia, NH3, will pass through the membrane, but water will not. The membrane 43 is a hydrophobic material such as polyethylene, or it can be e.g polytetrafluoroethane (PFTE) or other fluoropolymer.

At a pH of eleven and a temperature of fifty degC, the predominant form of the ammonia-N in the wastewater-subchamber 30 is ammonia, NH3. The rest of the ammonia-N (less than one percent at a pH of eleven) is present as ionised (dissolved) ammonium, NH4+. It will be understood that, as ammonia is taken out of the water, some of the remaining NH4+ will transform to NH3, and also pass through the membrane in turn. The ratio of NH4+ to NH3 remains more or less constant, even though the concentration changes, the ratio being dependent on the pH and redox voltage (and temperature) of the water. However, the more predominantly the ammonia-N in the wastewater is in the form of NH3, the more efficiently and readily the ammonia will pass through the membrane 25 -- hence the expenditure of resources to raise the pH to eleven and the temperature to fifty degC.

Ammonia emerging through the membrane 43 enters the secondary-water circulating around the secondary circuit 45. The secondary-water is at a low pH (e.g a pH of two) as it passes through the secondary-subchamber 47 of the membrane-chamber 25. At such low pH, the ammonia NH3 that has passed through the membrane 43 now transforms (almost) completely and immediately to ammonium NH4+. The ammonium-laden secondary-water then passes into an electrochemical reactor, which includes an electrolytic cell 49. The reactor also includes a power unit 50, which supplies suitable current and voltage to the cell.

The oxidised secondary-water, now with nitrogen gas, is conveyed to a holding tank 52, where the nitrogen gas (along with other products of ammonia oxidation, such as hydrogen gas) is allowed to escape and vent to the atmosphere, aided by an exhaust blower 53. The secondary-water, having given up its ammonium, continues around the secondary-circuit 45.

The secondary-water should be kept at a low pH, and hydrochloric acid, HCl, is stored, for make-up purposes, in acid-reservoir 54. Thus, the secondary-water is basically hydrochloric acid. A pH-sensor 56 and controller 58 (and in-line mixer 60) maintain the acidity of the secondary-water at e.g pH two; however, the secondary-water, in passing through the cell 49, undergoes a drop in pH, and often there is only a minimal requirement for more acid to be added. The secondary-water -- with its acidity restored -- can be used over again, and simply circulates and recirculates around the secondary-circuit 45. Another acid can be used, rather than HCl.

The secondary-water is not heated per se, but gains heat as it passes through the membrane-chamber 25, from the hot wastewater.

The preferred temperature at which the wastewater should enter the membrane-chamber is about fifty degC. Below that temperature, the ammonia does not pass so easily through the membrane, and about thirty degC should be regarded as the lower limit. As to an upper limit, no further benefit accrues from taking the wastewater much above fifty degC, and sixty degC should be regarded as the limit beyond which the extra heating brings no return. The upper limit, though, is a commercial one, of balancing the extra expenditure on heat against the savings in membrane efficiency.

The electrochemical reactor is designed with a series of alternating anode and cathode electrodes, and is operated so as to oxidise the ammonia to nitrogen gas. The main electrochemical reactions that occur at the anode are:

2NH4+ --> N2 + 8H+ + 6e

2C1 --> C12 + 2e

The resulting chemical reactions include:

C12 + H2O --> HOCl + HCl

2NH4+ + 3HOCL --> N2 + 3H2O + 5H+ + 3C1

The overall result is the oxidation of the ammonia to N2 gas.

The power unit typically supplies DC power at a constant current, with a typical current density range of one hundred to one thousand amps/sq.metre.

As mentioned, in US-7,160,430, two systems were described for extracting the ammonia from the wastewater, which were termed the acid-alkali system and the ion-exchange system. Both extraction systems had the same function -- namely, to transfer the ammonia out of the wastewater stream and into the body of secondary-water. The secondary-water, now laden with ammonia, was then subjected to electrolysis, whereby the ammonia-nitrogen was transformed to nitrogen gas. This present technology can be regarded as a third system for extracting ammonia from the wastewater, and for moving the ammonia into the secondary-water.

It might be regarded that, however the ammonia has been transferred to the secondary-water, the electrolysis of the secondary-water is largely equivalent, in function, in the US-7,160,430 technology as in the present technology. However, there are some differences in the manner in which the secondary-water is treated, or can be treated, as between US-7,160,430 and the present technology.

In US-7,160,430, the secondary-circuit was a two-loop circuit. The secondary-circuit was divided basically into two parallel flow-streams. In '430, in one flow-stream the secondary-water collected ammonia from the ammonia-extraction station, and in the other flow-stream the secondary-water was conveyed through the electrolysis station. The two flow-streams were mixed together by passing through a common tank.

In the example of the present technology as shown in Fig.1, the secondary circuit is a simple one-loop circuit. That is to say, all the secondary-water passing from the membrane chamber is conveyed to the electrolytic cell, and then all the water is returned to the membrane chamber, in a continuous loop.

In US-7,160,430, the two flow-streams required each their own respective pumps. The secondary-water going through the extraction-station required to be raised to the top of a column. There was thus no residual pressure left in the secondary-water emerging from the extraction-station, that might have been used to drive the secondary-water through the electrolysis-station -- hence the need for a second pump, to circulate the secondary-water through the electrolysis-station.

In the example of the present technology as shown in Fig.1, the secondary-water emerging from the membrane-chamber 25 does now have (or can have) some residual pressure, which is (or can be) enough to drive the secondary-water through the electrolysis-station -- hence, in Fig.1, only one pump is needed for the function of circulating the whole body of secondary-water, being the pump 61 in Fig.1.

Alternatively, the present technology -- briefly: the combination of electrolysis treatment with the extraction of ammonia from the wastewater stream by the use of the membrane -- can, if desired, be used with the kind of two-loop secondary-circuit as was disclosed in US-7,160,430.

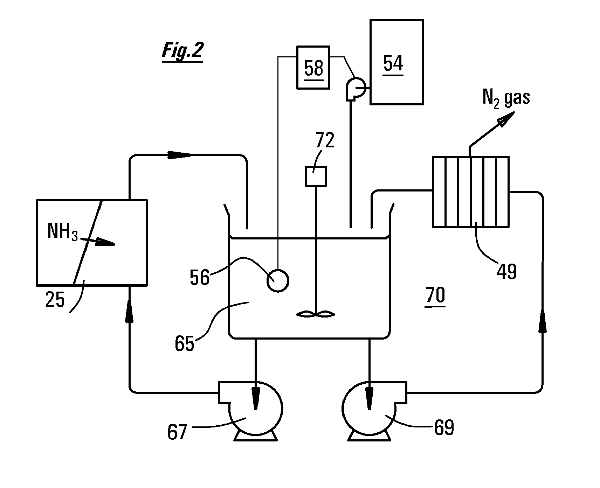

Fig.2 illustrates one manner in which the two-loop secondary-circuit can be implemented. (In Fig.2, the wastewater circuit is not illustrated.)

In Fig.2, the secondary-water acquires ammonia from the membrane-chamber 25, in a first loop 63 of the secondary circuit. The first loop 63 then conveys the ammonium-laden water into and through an intermediate tank 65.

In Fig.2, pump 67 creates the flow in the first loop. A second pump 69 creates the flow of secondary-water around the second loop 79 of the secondary-circuit, conveying the water through the electrolysis cell 49 and through the intermediate tank 65. A motorised mixer 72 ensures an absence of differences or gradients of concentration (and of pH, temperature, etc) in the tank 65.

Of course, the ammonia concentration in the secondary-water entering the tank 65 from the first loop 63 is quite different from the concentration in the secondary-water entering the tank from the second loop 70; and yet the secondary-water entering the membrane chamber 25 is the same as the secondary-water entering the cell 49. This constant mixing and separating of the secondary-water, via the tank 65, can be effective to increase the efficiency of the disposal of the ammonia-N.

One advantage of the two-loop circuit as shown in Fig.2 is that the two pumps 67,69 can be set to operate at different flowrates. This can be useful in that the designer might find it difficult to equate the flowrate requirements of the secondary-water as it passes through the ammonium-extraction-station and as it passes through the electrolysis-station -- which must needs be equal in the Fig.1 single-loop secondary-circuit arrangement.

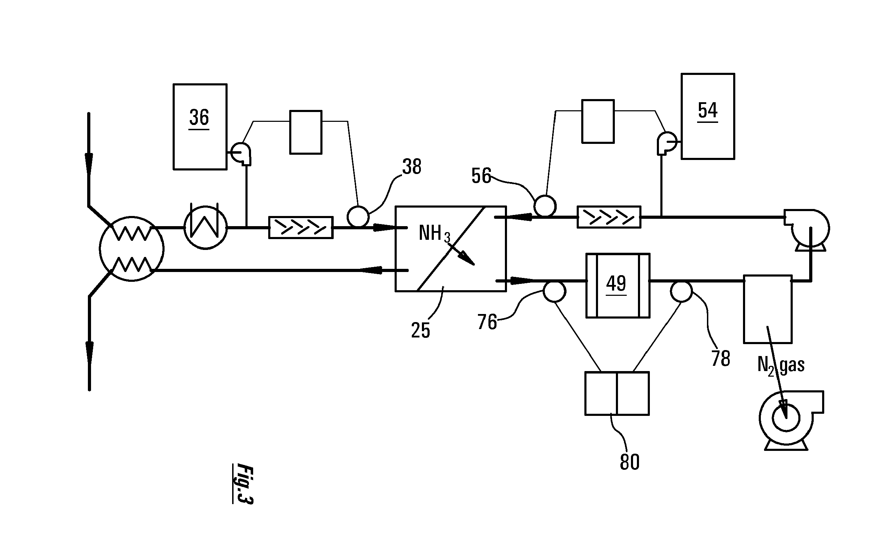

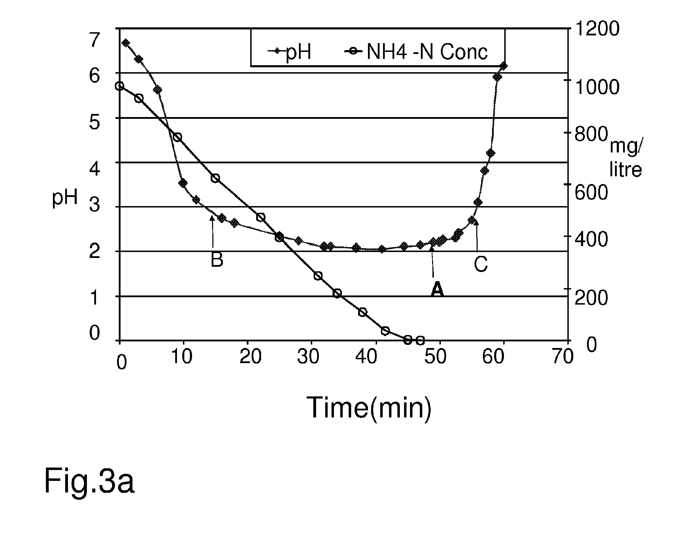

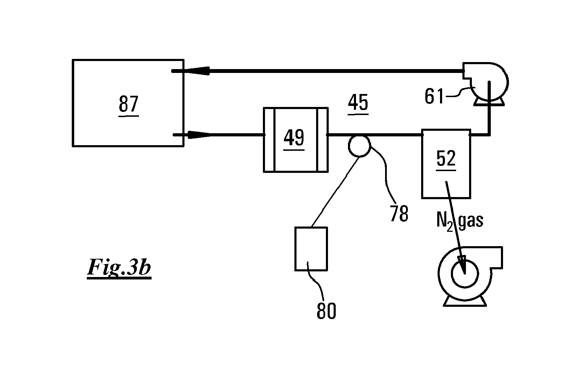

Fig.3 shows the apparatus of Fig.1, but now also illustrates pH-sensors 76,78, and controller 80. These elements of Fig.3 are used to enable an efficient, but inexpensive, manner of automated process-control of the operation of the electrochemical-reactor, which will now be described.

The new manner of process-control involves measuring the pH of the water, instead of measuring the concentration of ammonia in the water, as the basis for process-control. It will be understood that measuring the actual ammonia content of the secondary-water (or of any water) cannot (practically /commercially) be done directly, in real time, nor can it be done cheaply. On the other hand, inexpensive instruments for measuring pH are simple, reliable, and rapidly responsive. The system as described enables the removal of ammonia to be controlled reliably, and at low cost, simply by measuring the pH of the secondary-water.

Fig.3a includes a line-with-circles. This line is a graph of ammonia-N concentration in the secondary-water over a period of time. The line-with-circles was not constructed from measurements taken from the continuous-process system as shown in Fig.3; rather, the line-with-circles was constructed using an in-laboratory batch-process treatment system, using the apparatus illustrated in Fig.3b.

In Fig.3b, the body of secondary-water occupies a simple vessel 87, which contains no source of further ammonia. At first, the secondary-water contains ammonia-N at a concentration of 990 mg/litre. In this case, the secondary-water is brine, i.e contains NaCl. The secondary-water is recirculated through the secondary-circuit, by the pump 52, the secondary-water passing through the cell 49 of the electrochemical reactor. Thus, in Fig.3b, the concentration of ammonium in the secondary-water gradually decreases. The line-with-circles in Fig.3a represents the decreasing concentration, and shows that the ammonium-N content dropped to zero after about forty-six minutes.

Fig.3a also includes a line-with-diamonds. This line represents the pH of the recirculating secondary-water, measured at intervals, as the concentration of ammonia was falling. At first, the pH fell (i.e the secondary-water became more acidic) more or less in proportion to the fall in ammonia-concentration. This fall in pH was due to the electrochemical reactions -- no further acid was added in the in-lab apparatus of Fig.3b. At point B on the line-with-diamonds in Fig.3a, the fall in pH started to level off. The pH reached a minimum (actually at a pH of 2.1) just before the ammonia was all gone. After point C, once the ammonia is completely removed, excess chlorine as NaOC1 is formed, and this drives the pH back to (almost) neutral.

The experimental determination of minimum pH, of the kind as described with reference to Figs.3a,3b would be repeated for different ammonia loadings, and different water chemistries. In some cases, the minimum pH can be determined by modelling.

Now, it is recognised that these in-lab batch-process experimental measurements can be read onto the continuous-process treatment system of Fig.3. In Fig.3, the pH-sensor 78 measures the pH of the secondary-water at the point where it emerges from the cell 49. It is recognised that, in the continuous-process commercial treatment system of Fig.3, if the secondary-water can be maintained at a target pH, measured at sensor 78, of about 2.2, being the pH at point A on the line-with-diamonds in Fig.3a, then the operators can take it that the concentration of ammonia in the secondary-water has indeed dropped to zero.

In controlling the Fig.3 apparatus, it might be possible to adjust the concentration of ammonia in the secondary-water emerging from the cell 49 by slowing down the rate at which the secondary-water passes through the cell. Thus, if the pH, as measured at the pH-sensor 78, showed a reading of 2.1, for example, the operators would slow down the volumetric flow rate of the pump 52. This would result in the secondary-water having a slightly longer residence time in the cell 49, whereby the ammonium would be oxidised a little more thoroughly, and the pH would rise again to 2.2.

However, adjusting the flowrate in the secondary-circuit 45 is usually not an option, since the flowrate is dictated by the requirements of receiving the ammonia from the wastewater. The operators will prefer, rather, to adjust the electrical current supplied to the cell 49, as the way of lowering the concentration of ammonium remaining in the secondary-water -- and thereby of changing the pH of the secondary-water. Thus, if the pH as measured at the pH-sensor 78 showed a reading of 2.1, the operators would increase the amperage supplied to the cell. That being done, the residence-time that the secondary-water spends in the cell would be utilised a little more intensely, thereby oxidising the ammonium a little more thoroughly, and the pH would rise again to 2.2.

It will be understood that, if the pH reading at sensor 78 was, say, 2.8, the operators might not be able to tell whether they were measuring the equivalent of point B on Fig.3a, or of point C. However, the operators can settle this question by incrementing the current. If the pH goes down following an incremental increase in current, they must have been at point B, and therefore they should increase the current further; but if the pH goes up following the incremental increase in current, they must have been at point C, and they should decrease the current.

The operators start by choosing (i.e guessing) an operating current for the cell, based on the expected ammonia load. Then, the pH-sensor 78 is monitored, and adjustments made to the current so as to drive the pH to 2.2, or other desired target value.

It will be understood that it is a simple matter to automate the control of the cell current, raising or lowering the current so as to maintain the pH at the target value. Thus, if the ammonia loading should fluctuate (slightly), the automatic control system would adjust the current accordingly, so as to bring the pH back to the target value.

In some cases, the same target level of the pH as measured at pH-sensor 78 might apply to a wide range of ammonia loadings. The supplied current needed to achieve that target pH would decrease, of course, if the ammonia loading decreased, but the target itself might not change. In other cases, however, a change in ammonia loading might signal the need for a change in the target pH. Experiments would determine whether, and to what extent, changes in target pH should follow changes in ammonia loading.

If it were determined that a change in ammonia loading should be accompanied by a change in target-pH, it follows that a separate check should then be kept on the ammonia loading in the wastewater-circuit. Again, it is recognised that the ammonia loading can be monitored, not by direct measurement of ammonia content, but by using simple pH sensors.

The pH-sensors 56 and 76 can be used to determine the magnitude of the lowering of the pH of the secondary-water as the secondary-water passes through the membrane-chamber 25, and picks up its ammonium load. It is recognised that the ammonium concentration in the secondary-water is more or less proportional to the difference in pH between sensor 56 and sensor 76. If a change in this pH drop is detected, the control system can be programmed to move to a new setpoint pH, i.e to a new target pH level for the reading from pH-sensor 78, based on the derived new ammonia-loading. (The reason for a change in the ammonia-load in the body of secondary-water would normally be a change in the ammonia concentration in the incoming contaminated wastewater.)

In setting the target pH, for a given system, the prudent operators will probably carry out e.g periodic checks to determine whether the target pH, with which the control system is directly concerned, is actually achieving the desired degree of elimination of ammonia -- and is achieving that desired degree of elimination by the most economical usage of electrical power and other resources. So, although, as mentioned, it is not desirable to base on-going process-control on on-going direct measurements of ammonia-concentration, nevertheless it is desirable that such measurements should be taken from time to time, as an overall check on the correctness of the indirect parameters used by the control system.

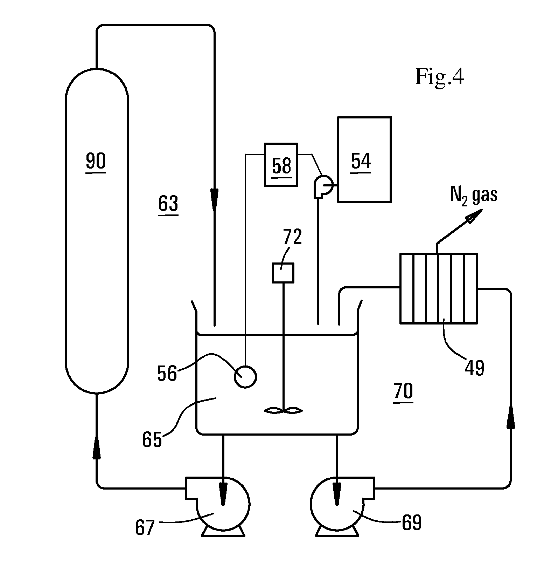

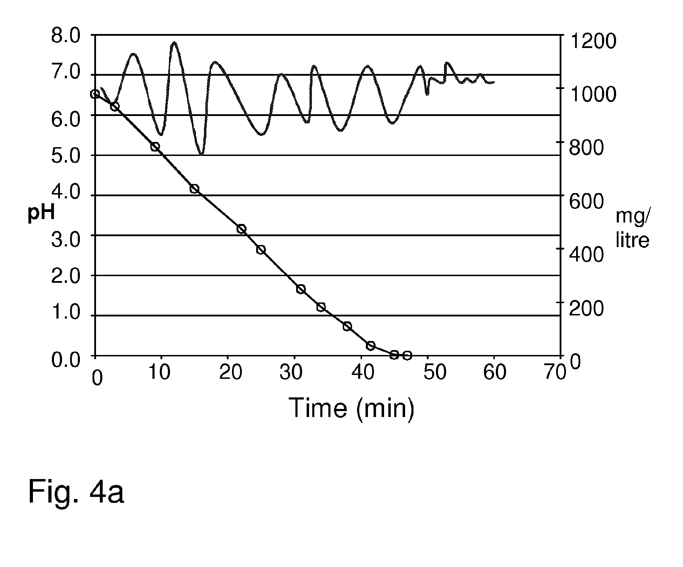

The apparatus of Fig.4 is, in some respects, similar to that shown in Fig.1 of US-7,160,430. The Fig.4 apparatus is being used for regenerating the column 90, which has become saturated with adsorbed ammonia extracted from the wastewater stream. The column is being regenerated to exchange the ammonia ions by sodium ions. The column is taken out of service, from the wastewater stream, while the regeneration operation is conducted.

In Fig.4, the regeneration system uses a two-loop secondary-circuit as was described with reference to Fig.2, and like numerals are used. In Fig.4, the secondary-water is brine.

Fig.4a is a graph showing a line-with-circles, which is a plot of the decreasing concentration of ammonia, over a period of time, as the dissolved ammonium is electrolysed and oxidised. (Fig.4a may be compared with Fig.3a, in this respect.) Both pumps 67,69 are kept running throughout the oxidation treatment described in Fig.4a, circulating and recirculating the secondary-water through the two loops of the secondary circuit, i.e through the column 90 and through the cell 49.

If no steps were taken to control the pH of the secondary-water, it might be expected that the pH as measured at the pH-sensor 56 in Fig.4 would more or less follow the same path as that indicated by the line-with-diamonds in Fig.3a. However, in Fig.4, the pH is indeed controlled. To ensure effective and efficient exchange of ammonia for sodium in the column, the pH should be maintained between a pH of about six and about eight. A pH of 6.8 was used as the target pH in Fig.4 and Fig.4a.

The pH-control-system operates in two phases. During the first phase, a constant current is applied to the cell. The operators set the time period of the first phase in that they aim to end the first phase as the concentration of ammonium drops down below e.g ten mg/litre. The second phase then commences. During the second phase, the aim is to ensure that all the ammonia is gone from the column, and to ensure that that result was accomplished with a minimum expenditure of resources. The designer can arrange for the first phase to end and the second phase to start by a simple timer.

Typically, the first phase might last for a period of e.g thirty minutes. During this time, the pH of the secondary-water in the tank 65 is monitored. If and when the pH, as measured at sensor 56 in Fig.4, drops below the target level, in this case below a pH of 6.8, the controller 58 signals the reservoir 54 to add a dose of NaOH into the secondary-water in the tank 65. The added alkalinity brings the pH back up above 6.8. Each time the pH falls below 6.8, the controller 58 triggers a new dose of NaOH to be added into the tank 65.

The wavy line in Fig.4a indicates the fluctuations of pH, following the periodic dosings of NaOH.

Again, the controller 58 is so programmed that, if/when the pH of the secondary-water goes below 6.8, the controller 58 deposits a dose of NaOH into the tank 65. The pH of the secondary-water falls due to the oxidation of the ammonium in the secondary-water, in the cell. (The reaction of the ammonium with the HOCl in the secondary-water also depresses the pH.) The deposition of a dose of NaOH into the secondary-water causes the pH to rise.

Thus, after the addition of the dose of NaOH, the pH of the secondary-water starts to rise again, i.e to rise back up above 6.8. Meanwhile, the on-going oxidation is causing the pH to fall again; when the pH falls below 6.8, that triggers another dose of NaOH to be added to the tank 49. Thus, the pH moves up/down, above and below the target-pH, cyclically.

The amount of the NaOH in the dose is set, by the operators, to procure a manageable cycle time period. For example, a cycle period around five minutes typically is advantageous, to give a good balance between cycle period and magnitude of the variations in pH, in a case where the total time to dispose of (nearly) all the ammonium is e.g forty or fifty minutes, as in the example shown in Fig.4a. The size of the dose should be set so that the pH up/down cycle time period is between about two minutes and ten minutes, for example, in practical terms. Again, the cycle period can be adjusted by adjusting the amount of NaOH added, per dose, to the tank 65.

If this first phase were to be continued after all the ammonium has been disposed of, the up/down cycling of the pH simply ceases. Because there is no oxidation taking place, the pH does not go down; and because the pH does not go below 6.8, there is no trigger to cause a further dose of NaOH to be added. So, the operators could simply end the treatment of the secondary-water, upon noting that the cyclic fluctuations of pH have ceased.

The disadvantage of this is that it is common for some ammonia to remain trapped in the column, and for these last traces of ammonia to be released only slowly into the secondary-water. Now, on the one hand, it might be acceptable to return the column 90 back into service to sorb more ammonia out of the wastewater, even though some traces of ammonia still remain in the column. If that is the case, the operators can decide to put the column back into service as soon as the cycle-time starts stops, -- or, simply, after a fixed period of time.

On the other hand, there is often little time constraint on getting the column back into service. Other columns are available, and in service, adsorbing the ammonia out of the wastewater. Anyway, it takes a much shorter time to flush the ammonia out of the column than it took to saturate the column with ammonia adsorbed from the wastewater. Thus, the prudent operators, wishing to be sure that no further change in pH (i.e no further oxidation) is in fact going to take place, do not mind so much waiting out a long after-period. What they do wish to avoid, however, is the waste of electricity that would occur if the cell were to be continually supplied during this long after-period.

Phase two of the treatment strategy is aimed at reducing the amount of electrical energy fed to the cell during the after-period, being the period in which the last traces of ammonia are being slowly captured from the column.

In phase two, the process-control strategy now changes. The controller 54 includes a timer, and in phase two, the timer is used to determine whether the pH of the secondary-water remains above 6.8 continuously for longer than, for example, about two minutes. If it does, that fact serves to trigger the act of switching the power off to the cell 49.

Once the power is switched off, oxidation of the ammonium stops, in the cell. But still, if there should be any further ammonia released from the column, some of the sodium from the NaOH will be used up, i.e extracted from the secondary-water. If that happens, the pH of the secondary water will (eventually) drop below 6.8 -- even though no oxidation is taking place. The continuing reaction of the NH4+ with the HOCl (see the equations in [0030] above) releases H+, causing the pH of the secondary-water to fall, even though the cell is not being supplied with electricity.

So, if the pH does indeed drop below 6.8 while the electricity to the cell is switched off, that fact can be used as a trigger, not only to dose another charge of NaOH into the tank 65, but also to signal the need to switch the electricity back on, to the cell 49.

Thus, the operators can leave the secondary-water circulating around the two loops of the secondary circuit (the pumps 67,69 draw comparatively little electricity) during the after-period, but they can switch off the (large amounts of) power to the cell during the after-period. By following this strategy, the operators can be confident that, if any more traces of ammonia should be drawn out of the column, the system will detect that fact, and will re-start the pH cycling sequence until it is gone.

It will be understood from Fig.4a that the period, and amplitude, of the pH up/down cycles does vary, apparently quite randomly, as oxidation proceeds. However, the operators will have no difficulty in discerning, simply from observing the amplitude and/or the period of the cycles, when the end of the need for oxidation treatment is approaching -- as shown by the change in the wavy line to the right of the fifty-minute mark in Fig.4a. The change in magnitude and/or frequency of the pH fluctuation cycles also can readily be picked up automatically by suitable programming of the controller 58.

Of course, there are some differences between the process-control features of the continuous-processing system as described with reference to Figs.3,3a and the process-control features of the batch-processing system as described with reference to Figs,4,4a. It will be understood that these differences are necessitated by the differences between those two types of processing. The similarity is emphasised that, in the present technology, both of the process-control systems use simple, inexpensive pH-sensors as the agency by which the signals are triggered to activate the required process changes.

## Claims

1. Apparatus for extracting ammonia from wastewater, and for discharging the ammonia-nitrogen as nitrogen gas, including:
[2] a wastewater-circuit, including conduits for conveying wastewater contaminated with ammonia into, through, and out of, the apparatus;
[3] a secondary-circuit, containing a body of secondary-water, and including conduits for conveying the secondary-water around the secondary-circuit;
[4] a membrane-chamber of the ammonia transfer station, having a membrane which physically divides the membrane-chamber into a wastewater-subchamber and a secondary-subchamber;
[5] the wastewater-subchamber is a component of the wastewater-circuit through which passes the wastewater, and the secondary-subchamber is a component of the secondary-circuit through which passes the secondary-water;
[6] the membrane is of such structure as to substantially prevent the passage of liquid water between the wastewater-subchamber and the secondary-subchamber;
[7] the membrane is of such structure as to be substantially permeable to the passage of ammonia gas between the wastewater-subchamber and the secondary-subchamber;
[8] an electrochemical reactor of the secondary-water circuit includes an electrolytic cell;
[9] the reactor is so arranged as to maintain, in the cell, the thermodynamic conditions favouring the transformation to nitrogen gas of ammonia dissolved in the secondary-water passing through the cell;
[10] a gas disposal unit of the electrochemical reactor, which is arranged to convey nitrogen gas generated in the reactor out of the apparatus;
[11] an operable alkali-supply, which is effective, when operated, to maintain the pH of wastewater entering the wastewater-subchamber at a pH of ten, or more.

2. As in claim 1, including an operable acid-supply, which is effective, when operated, to maintain the pH of secondary-water entering the secondary-subchamber at a pH of three, or less.

3. As in claim 1, including an operable heater, which is effective, when operated, to maintain the wastewater passing through the inlet port of the wastewater-subchamber at a temperature of forty degC, or hotter.

4. As in claim 1, including a pH-sensor, so arranged as to monitor the pH obtaining in the secondary-water emerging from the electrolytic cell.

5. As in claim 4, including:
[2] a second pH-sensor, so arranged as to monitor the pH obtaining in the secondary-water emerging from the secondary-subchamber of the membrane-chamber, and before entering the cell; and
[3] a third pH-sensor, so arranged as to monitor the pH obtaining in the secondary-water entering the secondary-subchamber.

6. Procedure for removing dissolved ammonia from a body of secondary-water in an electro-chemical reactor, including:
[2] arranging for the secondary-water to pass through an electrolytic cell of the reactor, the cell having been so arranged as to thermodynamically favour oxidation of the ammonia to nitrogen gas;
[3] transforming the ammonia into nitrogen gas, and discharging the same;
[4] providing a pH-sensor;
[5] arranging the pH-sensor in such manner as to measure the pH of the secondary-water, and in such manner as to detect changes in that pH;
[6] providing and arranging an operable pH-controller to be effective, when operated, to change one of the pH-changing parameters, being those process parameters a change in which procures a corresponding change in the pH of the secondary-water;
[7] establishing a target-pH; carrying out the following operations in sequence:-
[8] (i) taking a pH-reading from the pH-sensor;
[9] (ii) dependently upon the pH-reading being below the pH-target, operating the pH-controller to change one or more of the pH-changing parameters, in such manner as to raise the pH of the secondary-water;
[10] repeating the said sequence periodically, in such manner that the pH of the secondary-water remains at or near the target-pH during oxidation of the ammonia.

7. As in claim 6, including:
[2] circulating and re-circulating the secondary-water around a secondary circuit, the electrolytic cell being a component of the secondary-circuit; and
[3] adding ammonia that is to be oxidised and transformed, into the body of secondary-water at an ammonia-adding-station of the secondary-circuit.

8. As in claim 7, including:
[2] providing a wastewater-circuit, and receiving into an inlet-port thereof wastewater contaminated with ammonia at a concentration of at least 100 mg/litre;
[3] extracting ammonia from the wastewater at an ammonia-extraction-station of the wastewater-circuit;
[4] having extracted the ammonia from the wastewater, discharging the wastewater through an outlet-port of the wastewater-circuit;
[5] transferring the extracted ammonia, from the ammonia-extraction-station of the wastewater-circuit to the ammonia-adding-station of the secondary-circuit.

9. As in claim 7, including:
[2] transforming the ammonia in the secondary-water into nitrogen gas on a **continuous**-processing basis,
[3] by circulating the secondary-water around the secondary-circuit, while:-
[4] - continuously or continually adding ammonia into the secondary-water at the ammonia-adding-station; and
[5] - simultaneously oxidising the ammonia in the secondary-water, in the electrolytic-cell.

10. As in claim 9, including:
[2] providing the secondary-circuit as a one-loop circuit,
[3] in that the secondary-circuit conducts the secondary-water through the ammonia-adding-station where ammonia is added into the secondary-water, and then through the electrolytic cell where the ammonia is electrolysed, and then back to the ammonia-adding station.

11. As in claim 9, including:
[2] one of the pH-changing parameters being the amperage of electric current supplied to the electrolytic cell,
[3] operating the pH-controller to increase said amperage, dependently upon the pH-reading going below the pH-target.

12. As in claim 9, including:
[2] making a determination as to the target-pH as follows:-
[3] providing a batch of ammonia in the secondary-water;
[4] circulating and re-circulating the secondary-water through the cell, whereby the ammonia is oxidised in the cell, and whereby the amount of ammonia residing in the secondary-water progressively decreases in amount;
[5] taking readings of the pH of the secondary-water, during the period of decrease of the concentration of ammonia in the secondary-water;
[6] noting the minimum reading of pH;
[7] setting the target-pH at a pH that is a little higher than the minimum reading, being no more than half a unit of pH higher than the minimum reading.

13. As in claim 9, including:
[2] providing the secondary-circuit as a two-loop circuit,
[3] an intermediate tank is a component of the secondary-circuit, and the secondary-water passes through the tank;
[4] a first loop of the secondary-circuit conducts the secondary-water through the ammonia-adding-station and back to the tank;
[5] a second loop of the secondary-circuit conducts the secondary-water through the electrolytic cell and back to the tank;
[6] the tank is so arranged that the secondary-water returning from the first loop mixes, in the tank, with the secondary-water returning from the second loop;
[7] whereby the secondary-water is circulated and re-circulated through both loops of the secondary-circuit;
[8] so placing the pH-sensor as to measure the pH of the secondary-water in the tank.

14. As in claim 6, including:
[2] transforming the ammonia in the secondary-water into nitrogen gas on a **batch**-processing basis,
[3] by providing the ammonia-adding-station with a fixed batch of ammonia; and
[4] by circulating the secondary-water around the secondary-circuit, while:-
[5] - refraining from adding any further ammonia to the batch in the ammonia-adding-station;
[6] - releasing the ammonia of the batch gradually over a period of time from the ammonia-adding-station, into the secondary-water;
[7] - whereby the batch of ammonia residing in the ammonia-adding-station progressively decreases in amount; and
[8] - simultaneously oxidising the ammonia in the secondary-water, in the electrolytic-cell; and
[9] so continuing, until the batch of ammonia has been transformed into nitrogen gas.

15. As in claim 14, including:
[2] where the ammonia-adding-station of the secondary-circuit includes an ion-exchange column, in which ammonia has been sorbed onto the material of the column;
[3] the secondary-water includes brine;
[4] setting the target-pH at a value between a pH of six and a pH of eight;
[5] providing a quantity of a base substance, such as sodium hydroxide, which includes an ion to be exchanged for the ammonium sorbed onto the column, in the ion-exchange;
[6] one of the pH-changing parameters being the concentration of the base-substance in the secondary-water;
[7] dependently upon the pH-reading from the pH-sensor falling below the pH-target, dosing a charge-volume of the base substance into the secondary-water, thereby raising the pH thereof;
[8] continuing to take pH-readings from the pH-sensor, and dosing a further charge-volume of the base material into the secondary-water if and when the pH-reading should fall below the pH-target;
[9] providing the secondary-circuit as a two-loop circuit,
[10] an intermediate tank is a component of the secondary-circuit, and the secondary-water passes through the tank;
[11] a first loop of the secondary-circuit conducts the secondary-water through the ammonia-adding-station and back to the tank;
[12] a second loop of the secondary-circuit conducts the secondary-water through the electrolytic cell and back to the tank;
[13] so arranging the tank that the secondary-water returning from the first loop mixes, in the tank, with the secondary-water returning from the second loop;
[14] whereby the secondary-water is circulated and re-circulated through both loops of the secondary-circuit.
